Europäisches Patentamt

(19) European Patent Office

Office européen des brevets

(11) Numéro de publication: **0 265 311**
**B1**

(12) **FASCICULE DE BREVET EUROPEEN**

(45) Date de publication du fascicule du brevet: **16.01.91**

(21) Numéro de dépôt: **87402150.4**

(22) Date de dépôt: **25.09.87**

(51) Int. Cl.⁵: **G 21 C 15/12,** G 21 C 11/08,
G 21 C 1/02

(54) **Dispositif de refroidissement de la cuve principale d'un réacteur nucléaire à neutrons rapides refroidi par un métal liquide.**

(30) Priorité: **09.10.86 FR 8614052**

(43) Date de publication de la demande:
**27.04.88 Bulletin 88/17**

(45) Mention de la délivrance du brevet:
**16.01.91 Bulletin 91/03**

(84) Etats contractants désignés:
**DE GB IT**

(56) Documents cités:
**EP-A-0 064 921**
**FR-A-2 291 580**
**FR-A-2 425 129**
**US-A-4 167 445**

(73) Titulaire: **FRAMATOME**
**Tour Fiat 1, Place de la Coupole**
**F-92400 Courbevoie (FR)**

(72) Inventeur: **Cros, Alain Résidence les Hauts de Saint Rambert**
**4, rue Marc Boegner**
**F-69009 Lyon (FR)**

(74) Mandataire: **Bouget, Lucien et al**
**Cabinet Lavoix 2, Place d'Estienne d'Orves**
**F-75441 Paris Cédex 09 (FR)**

Courier Press, Leamington Spa, England.

## Description

L'invention concerne un dispositif de refroidissement de la cuve principale d'un réacteur nucléaire à neutrons rapides refroidi par un métal liquide tel que le sodium.

Dans les réacteurs nucléaires à neutrons rapides refroidis par un métal liquide, la cuve principale de grandes dimensions contient du métal liquide dans lequel plonge le coeur du réacteur. Cette cuve comporte généralement une paroi latérale cylindrique et un fond bombé et sa suspension à la structure du réacteur est assurée par l'intermédiaire de l'extrémité supérieure de sa paroi cylindrique.

Le niveau du métal liquide dans la cuve principale est tel que la partie supérieure de la paroi cylindrique est en contact avec ce sodium jusqu'à une certaine hauteur, la partie immergée est donc par conduction à la même température que le sodium qui est en contact avec elle; la partie supérieure de la cuve principale en contact avec du gaz a une température qui décroît pratiquement linéairement jusqu'à son encastrement.

Pour remplir son rôle de supportage du coeur et d'enceinte intermédiaire de sécurité, la cuve doit être maintenue froide pendant son fonctionnement normal (option à fluage négligeable); de plus le système doit être tel que le niveau libre de sodium en contact avec la cuve soit fixe pour éviter les problèmes de déformations progressives liés aux variations de niveau.

Il faut donc maintenir froide et à un niveau fixe de sodium cette partie supérieure de la cuve principale située au droit du collecteur chaud (8).

Parmi de nombreuses solutions, la plus usitée, selon le document EP-A-0064 921, consiste à faire circuler du sodium refroidi en contact avec la surface intérieure de la paroi de la cuve, dans sa partie supérieure. Ce sodium refroidi ou sodium froid est prélevé à la sortie des pompes primaires et provient du collecteur froid du réacteur dans lequel débouche la sortie des échangeurs intermédiaires. On assure, grâce à des moyens adaptés, l'injection de ce sodium froid dans un premier collecteur, ou collecteur de déversement, de forme annulaire et ménagé entre la partie supérieure de la paroi de la cuve principale, de forme globalement cylindrique, et une virole appelée virole de déversement coaxiale à la paroi de la cuve principale et d'un diamètre inférieur au diamètre de cette cuve. La hauteur de la virole et du collecteur de déversement correspondent à une fraction de la hauteur de la cuve.

Le sodium froid reçu dans le collecteur de déversement s'écoule dans un second collecteur annulaire appelé collecteur de restitution, par dessus l'extrémité supérieure de la virole de déversement. Le collecteur de restitution est délimité par la virole de déversement constituant sa paroi externe et par une virole interne de forme globalement cylindrique coaxiale à la virole de déversement et à la paroi de la cuve et d'un diamètre inférieur à celui de la virole de déversement. Le fond du collecteur de restitution est percé de trous permettant le retour du sodium liquide dans le collecteur froid de la cuve principale. Ces trous sont prévus en fonction du débit d'arrivée du sodium froid dans le collecteur de restitution, de façon que le niveau de sodium s'établisse dans ce collecteur à une certaine hauteur en-dessous du niveau de débordement du sodium correspondant à l'extrémité supérieure de la virole de déversement.

L'alimentation en sodium froid du collecteur de déversement est généralement assurée par des tubes le faisant communiquer avec le platelage supportant le sommier recevant les pieds des assemblages du coeur, dans lequel le sodium froid est injecté par les pompes.

Dans les dispositifs connus, la virole de déversement et la virole interne sont reliées à un même fond, si bien que les deux collecteurs ont une hauteur sensiblement équivalente. D'autre part, la hauteur de chute du sodium correspondant à la différence de niveau dans les deux collecteurs est telle que le déversement du sodium entraine des phénomènes de vibration de la cuve et des viroles délimitant les collecteurs.

En effet, les cuves principales des réacteurs nucléaires à neutrons rapides construits actuellement ou en cours de conception présentent un diamètre important, de l'ordre de vingt mètres, et une épaisseur relativement faible, de l'ordre de vingt-cinq millimètres, permettant de limiter les contraintes thermiques et le poids de métal utilisé pour la construction de la cuve. Les viroles des collecteurs ont elles-mêmes des dimensions proches de celles de la cuve et ces ensembles sont extrêmement souples et comportent des périodes propres de vibrations très faibles et voisines les unes des autres. Des vibrations sont donc facilement engendrées lors du déversement du sodium.

Le but de l'invention est donc de proposer un dispositif de refroidissement de la cuve principale d'un réacteur nucléaire à neutrons rapides refroidi par un métal lique tel que le sodium, la cuve principale à aue vertical du réacteur ayant une forme globalement cylindrique dans sa partie supérieure et contenant du dit métal liquide et un dispositif de refroidissement étant constitué par un premier collecteur annulaire ménagé entre la partie supérieure de la paroi de la cuve principale et une virole de déversement coaxiale à la cuve principale d'un diamètre inférieur à celui de la cuve, par un second collecteur annulaire ménagé entre la virole de déversement et une virole interne coaxiale à la cuve principale et à la virole de déversement et d'un diamètre inférieur à celui de la virole de déversement et par un moyen d'amenée de métal liquide refroidi dans le premier collecteur de façon à mettre en contact avec la paroi interne de la cuve principale, ce métal liquide refroidi qui s'écoule ensuite dans le second collecteur par dessus l'extrémité supérieure de la virole de déversement, pour retourner ensuite dans la cuve principale par des ouvertures prévues dans le fond du second collecteur, ce dispositif de refroidissement permettant de limiter les vibrations à un minimum, lors de la circulation du sodium refroidi.

Dans ce but, la virole interne du second collecteur présente une hauteur sensiblement inférieure à la hauteur de la virole de déversement, les extrémités supérieures de ces viroles étant sensiblement au même niveau et la partie inférieure de la virole interne du second collecteur étant reliée à la virole de déversement dans une zone éloignée des extrémités de cette virole de déversement, par l'intermédiaire du fond du second collecteur dont les ouvertures calibrées permettent de régler le niveau de métal liquide dans le second collecteur, de manière à limiter la hauteur de chute du sodium, indépendamment du niveau du métal liquide dans la cuve principale.

Afin de bien faire comprendre l'invention, on va maintenant décrire, à titre d'exemple non limitatif, en se référant aux figures jointes en annexe, un mode de réalisation d'un dispositif de refroidissement suivant l'invention utilisé dans un réacteur nucléaire à neutrons rapides de type intégré refroidi par du sodium liquide.

La figure 1 est une vue en coupe par un plan vertical d'une partie d'un réacteur nucléaire à neutrons rapides comportant un dispositif de refroidissement suivant l'invention.

La figure 2 est une vue agrandie d'une partie de la figure 1 correspondant au dispositif de refroidissement.

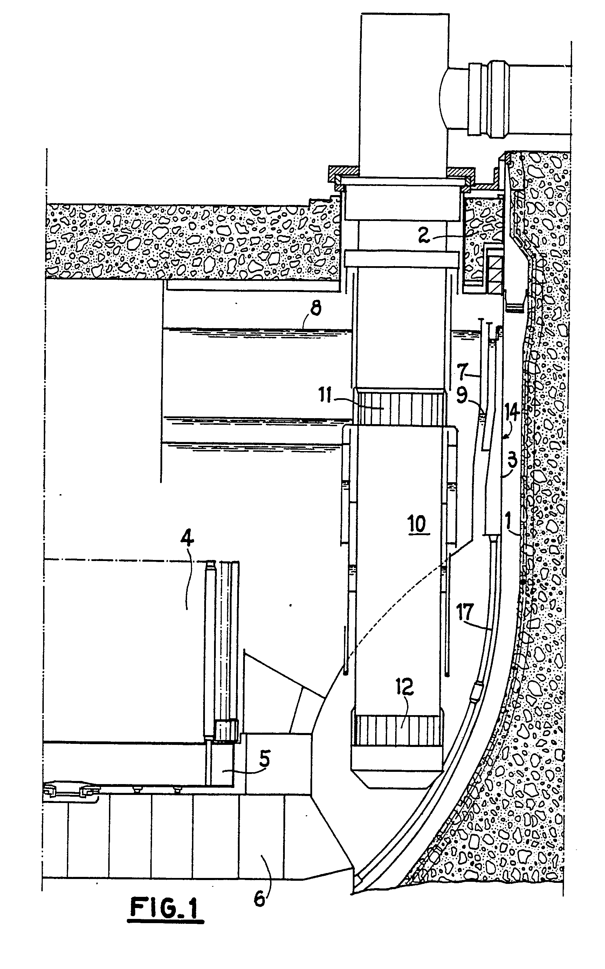

Sur la figure 1, on voit une partie du puits de cuve 1 d'un réacteur nucléaire à neutrons rapides à la partie supérieure duquel est fixée la dalle 2 fermant la cuve principale 3 du réacteur. La cuve 3 comporte une paroi latérale cylindrique fermée par un fond bombé. La partie supérieure de la paroi latérale assure la suspension de la cuve 3 dans le puits de cuve 1. La cuve principale 3 renferme du sodium liquide de refroidissement dans lequel est plongé le coeur 4 du réacteur constitué par des assemblages combustibles dont les pieds sont fixés dans un sommier 5 reposant sur un platelage 6 lui-même supporté par le fond de la cuve 3.

La cuve principale renferme une cuve interne 7 délimitant à l'intérieur de la cuve principale un collecteur chaud rempli de sodium jusqu'au niveau 8 dans lequel est plongé le coeur 4 du réacteur et un collecteur froid contenant du sodium liquide jusqu'au niveau supérieur 9. Un échangeur intermédiaire 10 pénètre dans la cuve par une ouverture de la dalle 2 et traverse la cuve interne 7 de façon que sa partie supérieure comportant des ouvertures d'entrée 11 soit dans le collecteur chaud et sa partie inférieure comportant des ouvertures de sortie 12 dans le collecteur froid.

Des pompes non représentées permettent de prélever le sodium refroidi provenant des sorties 12 des échangeurs intermédiaires tels que 10, dans le collecteur froid et de le réinjecter à la base du coeur, dans le sommier 5. Le sodium refroidi dans les échangeurs intermédiaires est ainsi renvoyé à la base du coeur 4 dans lequel il s'échauffe en circulant de bas en haut.

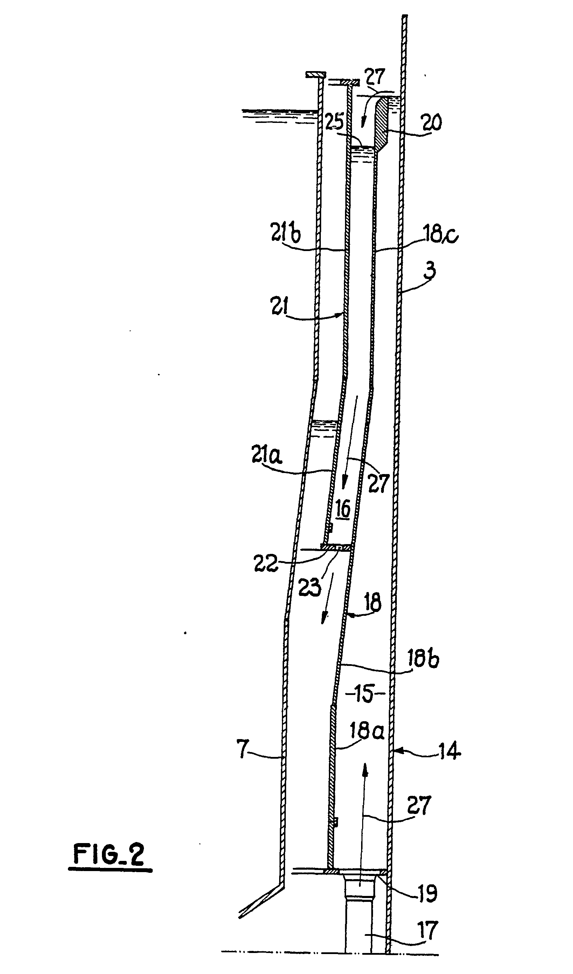

Le dispositif de refroidissement de la partie supérieure de la cuve 3 désigné de façon générale par le repère 14 et visible sur les figures 1 et 2 comporte un premier collecteur 15, un second collecteur 16 et un ensemble de tubes d'alimentation en sodium refroidi 17 joignant la partie basse du platelage 6 à la partie inférieure du premier collecteur 15.

Le premier collecteur 15, ou collecteur de déversement, présente une forme annulaire et se trouve délimité par la partie supérieure de la paroi de la cuve principale 3 et par une virole de déversement 18 reliée à sa partie inférieure à la de la cuve principale 3 par une plaque annulaire 19. La virole de déversement 18 comporte une partie inférieure 18a cylindrique reliée par son extrémité inférieure à la plaque annulaire 19, une partie tronconique intermédiaire 18b évasée vers le haut et une partie supérieure cylindrique 18c terminée par un seuil de déversement 20 constitué par un patin annulaire ayant une section de forme arrondie visible sur la figure 2. Le seuil de déversement 20 est continu sur toute la périphérie de la virole 18c et présente une forme, en section méridienne, permettant d'assurer une bonne adhérence de la lame de sodium en cours d'écoulement sur le seuil 20 et d'éviter l'entraînement du gaz de couverture présent au-dessus du niveau supérieur du sodium. Les viroles successives 18a, 18b et 18c constituant la virole de déversement 18 sont toutes coaxiales à la cuve 3 et présentent un diamètre inférieur au diamètre de cette cuve.

La plaque annulaire 19 constituant le fond du collecteur de déversement 15 est percée d'ouvertures dans lesquelles pénètrent les extrémités des tubes d'alimentation 17.

Du sodium refroidi provenant du sommier 5 dans lequel il est injecté par les pompes du réacteur pénètre donc dans le collecteur de déversement 15 qui se trouve rempli jusqu'à son niveau supérieur correspondant au seuil de déversement 20.

Le second collecteur 16, ou collecteur de restitution, est délimité par la partie supérieure de la virole de déversement 18 et par une virole interne 21 reliée à sa partie inférieure à la virole de déversement par une plaque annulaire 22 soudée sur la virole de déversement et à l'extrémité de la virole inter ne 21. La virole interne 21 comporte une partie inférieure 21a de forme tronconique et une partie supérieure 21b de forme cylindrique. L'extrémité supérieure de la partie 21b est à un niveau légèrement supérieur au niveau du seuil 20 et comporte un rebord annulaire horizontal.

Les viroles successives 21a et 21b constituant la virole interne 21 sont coaxiales à la virole de déversement 18 et à la paroi de la cuve principale 3. Ces viroles 21a et 21b ont des diamètres inférieurs au diamètre des parties correspondantes de la virole de déversement 18. La virole interne 21 et la virole de déversement 18 ont un espacement pratiquement constant sur toute la hauteur du collecteur de restitution 16. Le fond 22 de ce collecteur est percé d'ouvertures 23 permettant le retour du sodium liquide, avec un débit contrôlé dans le collecteur froid ménagé à l'intérieur de la cuve principale par la cuve interne 7. Les ouvertures 23 sont telles que le niveau du sodium refroidi qui se déverse dans le collecteur de restitution 16 s'établit en une position 25 située en-dessous de la partie supérieure de déversement du seuil 20.

Pour éviter les risques de mise en vibration des viroles et de la cuve, la hauteur séparant la partie supérieure de déversement du seuil 20 du niveau 25 du sodium dans le collecteur 16 est maintenue à une valeur voisine de 0,32 mètre.

De plus, suivant l'invention, la hauteur de la virole interne 21 du collecteur de restitution 16 est sensiblement inférieure à la hauteur de la virole de déversement 18. La partie supérieure de cette virole interne 21 étant à un niveau voisin du niveau du seuil 20, la partie inférieure de la virole 21 est reliée à la virole 18, par la plaque 22 constituant le fond du collecteur de restitution 16, dans une zone de la virole 18 éloignée de ses extrémités.

On choisira de préférence une virole interne ou virole de restitution 21 dont la hauteur est voisine de la moitié de la hauteur de la virole 18.

De façon plus générale, on pourra utiliser, en restant dans le cadre de l'invention, une virole de restitution 21 d'une hauteur comprise entre un tiers et deux tiers de la hauteur de la virole de déversement 18.

De cette façon, la virole interne ou virole de restitution 21 a une fréquence de vibration très différente de celle de la virole de déversement 18. De plus, la plaque annulaire 22 constituant le fond du collecteur de restitution 16 assure le raidissement de la virole de déversement 18 à laquelle elle est fixée, dans une zone qui est voisine de sa partie médiane ou au moins, éloignée de ses extrémités.

La virole de déversement qui présente une plus grande raideur résiste mieux au flambage. Il en est de même de la virole interne 21 dont la hauteur plus faible s'accompagne d'une raideur plus forte.

Les deux viroles délimitant le collecteur 16 ayant des périodes propres très différentes et une raideur beaucoup plus élevée que dans le cas des dispositifs selon l'art antérieur, le risque de couplage en vibration des deux collecteurs est nul et les vibrations n'ont plus tendance à s'amorcer, pendant la circulation du sodium de refroidissement schématisée par les flèches 27, La forme du seuil de déversement 20 permet d'assurer une bonne adhérence de la lame de sodium et d'éviter l'entraînement de gaz par le sodium. Le déversement sur toute la périphérie de la virole 18 assure également sans difficulté le passage d'un débit de sodium important.

De plus, la disposition selon l'invention a l'avantage de réduire la quantité de tôles métalliques utilisées pour la construction du dispositif de refroidissement, la virole interne de restitution 21 étant de hauteur réduite.

L'invention ne se limite pas au mode de réalisation qui a été décrit.

C'est ainsi que la forme des viroles de déversement et de restitution respectivement peut être différente de celle qui a été décrite, que la fixation de la partie inférieure de la virole de restitution sur la virole de déversement peut être réalisée d'une autre manière que par l'intermédiaire d'une plaque annulaire et que la partie supérieure de la virole de restitution peut être placée au niveau exact de la partie supérieure de la virole de déversement.

Enfin, le dispositif de refroidissement suivant l'invention s'applique à tout réacteur nucléaire à neutrons rapides refroidi par un métal liquide.

**Revendications**

1. Dispositif de refroidissement de la cuve principale (3) d'un réacteur nucléaire à neutrons rapides refroidi par un métal liquide tel que le sodium, la cuve principale (3) à aue vertical du réacteur ayant une forme globalement cylindrique dans sa partie supérieure et contenant du dit métal liquide et un dispositif de refroidissement (14) constitué par un premier collecteur annulaire (15) ménagé entre la partie supérieure de la paroi de la cuve principale (3) et une virole de déversement (18) coaxiale à la cuve principale (3), d'un diamètre inférieur à celui de la cuve principale, par un second collecteur annulaire (16) ménagé entre la virole de déversement (18) et une virole interne (21) coaxiale à la cuve principale (3) et à la virole de déversement (18) et d'un diamètre inférieur à celui de la virole de déversement (18) et par un moyen (17) d'amenée de métal liquide refroidi dans le premier collecteur (15), de façon à mettre en contact avec la paroi interne de la cuve principale (3), ce métal liquide refroidi qui s'écoule ensuite dans le second collecteur (16) par dessus l'extrémité supérieure de la virole de déversement (18) pour retourner ensuite dans la cuve principale par des ouvertures (23) prévues dans le fond du second collecteur, caractérisé par le fait que la virole interne (21) du second collecteur (16) présente une hauteur sensiblement inférieure à la hauteur de la virole de déversement (18), les extrémités supérieures de ces viroles (18, 21) étant sensiblement au même niveau et la partie inférieure de la virole interne (21) du second collecteur (16) étant reliée à la virole de déversement (18) dans une zone éloignée des extrémités de cette virole de déversement (18), par l'intermédiaire du fond du second collecteur dont les ouvertures calibrées (23) permettent de régler le niveau de métal liquide dans le second collecteur (16), de manière à limiter la hauteur de chute du sodium, indépendamment du niveau du métal liquide dans la cuve principale.

2. Dispositif de refroidissement suivant la revendication 1, caractérisé par le fait que la hauteur de la virole interne (21) du second collecteur (16) est comprise entre un tiers et deux tiers de la hauteur de la virole de déversement (18).

3. Dispositif de refroidissement suivant la revendication 2, caractérisé par le fait que la hauteur de la virole interne (21) du second collecteur (16) est voisine de la moitié de la hauteur de la virole de déversement (18).

4. Dispositif de refroidissement suivant l'une quelconque des revendications 1, 2 et 3, caractérisé par le fait que la partie inférieure de la virole interne (21) du second collecteur (16) est reliée à la virole de déversement par l'intermédiaire d'une plaque annulaire plane (22) assurant le raidissement de la virole de déversement (18) dans une zone éloignée de ses extrémités.

5. Dispositif suivant l'une quelconque des revendications 1, 2, 3 et 4 caractérisé par le fait que la virole de déversement (18) est solidaire à sa partie supérieure d'un seuil de déversement (20) annulaire, ayant une section méridienne de forme arrondie assurant une bonne adhérence de la lame de sodium en circulation et un entraînement très réduit de gaz, au passage du seuil.

6. Dispositif de refroidissement suivant la revendication 1, caractérisé par le fait que les overtures (23) prévues dans le fond (22) du second collecteur (16) sont telles que le niveau (25) du sodium refroidi s'établit dans une position située sensiblement 0,32 mètre en-dessous de la partie supérieure de la virole de déversement (18) constituant le seuil de déversement.

**Patentansprüche**

1. Kühlvorrichtung des Hauptgefäßes (3) eines schnellen Neutronenreaktors, der durch ein Flüssigmetall, wie beispielsweise Natrium, gekühlt wird, wobei das Hauptgefäß (3) mit vertikalem Galgen des Reaktors, der in seinem oberen Bereich eine allgemein zylindrische Form aufweist, das flüssige Metall enthält, und einer Kühlvorrichtung (14) gekühlt wird, die von einem ersten ringförmigen Kollektor (15), der zwischen dem oberen Bereich der Seitenwand des Hauptgefäßes (3) und einem zum Hauptgefäß (3) koaxialen Austragsmantel (18), von einem geringeren Durchmesser als jener des Hauptgefäßes, von einem zweiten ringförmigen Kollektor (16), der zwischen dem Austragsmantel (18) und einem inneren Mantel (21), der koaxial zum Hauptgefäß (3) und zum Austragsmantel (18) verläuft und einen Durchmesser aufweist, der geringer ist als jener des Austragsmantels (18), und von einer Einrichtung (17) der Zufuhr von gekühltem Flüssigmetall in den ersten Kollektor (15) gebildet wird, derart, um dieses gekühlte Flüssigmetall mit der inneren Seitenwand des Hauptgefäßes (3) in Berührung zu bringen, das sich sodann in den zweiten Kollektor (16) über das obere Ende des Austragsmantels (18) ergießt, um sodann in das Hauptgefäß durch Öffnungen (23) zurückzukehren, die in dem Boden des zweiten Kollektors vorgesehen sind, dadurch gekennzeichnet, daß der innere Mantel (21) des zweiten Kollektors (16) eine Höhe aufweist, die wesentlich geringer ist als die Höhe des Austragsmantels (18), wobei die oberen Enden dieser Mäntel (18, 21) im wesentlichen auf derselben Höhe liegen, und der untere Bereich des inneren Mantels (21) des zweiten Kollektors (16) mit dem Austragsmantel (18) in einer von den Enden dieses Austragsmantels (18) entfernten Zone verbunden ist, mittels des Bodens des zweiten Kollektors, dessen kalibrierte Öffnungen (23) erlauben, das Niveau des Flüssigmetalls in dem zweiten Kollektor (16) derart zu steuern, daß die Höhe des Natriumfalls unabhängig vom Niveau des Flüssigmetalls, in dem Hauptgefäß begrenzt wird.

2. Kühlvorrichtung nach Anspruch 1, dadurch gekennzeichnet daß die Höhe der Innenwand (21) des zweiten Kollektors (16) zwischen einem Drittel und zwei Drittel der Höhe der Austragswand (18) beträgt.

3. Kühlvorrichtung nach Anspruch 2, dadurch gekennzeichnet, daß die Höhe der Innenwand (21) des zweiten Kollektors (16) ungefähr auf der Hälfte der Höhe der Austragswand (18) liegt.

4. Kühlvorrichtung nach einem der Ansprüche 1, 2 oder 3, dadurch gekennzeichnet, daß der untere Bereich der Innenwand (21) des zweiten Kollektors (16) mit der Austragswand mittels einer ebenen ringförmigen Platte (22) verbunden ist, die die Aussteifung der Austragswand (18) in einer von seinen Enden entfernten Zone sicherstellt.

5. Kühlvorrichtung nach einem der Ansprüche 1 bis 4, dadurch gekennzeichnet, daß die Austragswand (18) an ihrem oberen Bereich mit einem ringförmigen Austragsvorsprung (20) verbunden ist, der einen Meridianquerschnitt von abgerundeter Form aufweist, der eine gute Anhaftung der Natriumlamelle bei Zirkulation und eine sehr reduzierte Gasmitnahme beim Vorbeibewegen an dem Vorsprung sicherstellt.

6. Kühlvorrichtung nach Anspruch 1, dadurch gekennzeichnet, daß die in dem Boden (22) des zweiten Kollektors (16) vorgesehenen Öffnungen (23) derart sind, daß das Niveau (25) des gekühlten Natriums sich auf einer Position einstellt, die im wesentlichen 0,32 Meter unterhalb des oberen Bereichs der Austragswand (18), die den Austragsvorsprung bildet, angeordnet ist.

**Claims**

1. Device for cooling the main tank (3) of a fast-neutron nuclear reactor cooled by a liquid metal, such as sodium, the main tank (3), with a vertical axis, of the reactor having a substantially cylindrical shape in its upper part and containing said liquid metal, and a cooling device (14) consisting of a first annular collector (15) formed between the upper part of the wall of the main tank (3) and an overflow sleeve (18) coaxial with the main tank (3) and smaller in diameter than the main tank, a second annular collector (16) formed between the overflow sleeve (18) and an inner sleeve. (21) coaxial with the main tank (3) and the overflow sleeve (18) and smaller in diameter than the overflow sleeve (18), and means (17) for conveying cooled liquid metal into the first collector (15), so as to bring the cooled liquid metal into contact with the inner wall of the main tank (3), this cooled liquid metal subsequently flowing into the second collector (16) over the top of the upper end of the overflow sleeve (18), in order thereafter to return to the main tank through openings (23) provided in the bottom of the second collector, characterised in that the inner sleeve (21) of the second collector (16) is substantially lower in height than the overflow sleeve (18), the upper ends of these sleeves (18, 21) being substantially at the same level, and the lower part of the inner sleeve (21) of the second collector (16) being connected to the overflow sleeve (18), in a region remote from the ends of this overflow sleeve (18), by way of the bottom of the second collector, the calibrated openings (23) of which make it possible to regulate the level of liquid metal in the second collector (16), so as to restrict the drop height of the sodium, irrespective of the level of liquid metal in the main tank.

2. Cooling device according to Claim 1, characterised in that the height of the inner sleeve (21) of the second collector (16) is between one third and two thirds of the height of the overflow sleeve (18).

3. Cooling device according to Claim 2, characterised in that the height of the inner sleeve (21) of the second collector (16) is approximately half the height of the overflow sleeve (18).

4. Cooling device according to any of claims 1, 2 and 3, characterised in that the lower part of the inner sleeve (21) of the second collector (16) is connected to the overflow sleeve by means of a flat annular plate (22) which stiffens the overflow sleeve (18) in a region remote from its ends.

5. Device according to any one of Claims 1, 2, 3 and 4, characterised in that the overflow sleeve (18) is integral, in its upper part, with an annular overflow sill (20) of rounded mid-section, ensuring good adhesion of the stream of circulating sodium and minimising the amount of gas carried along as the sodium passes over the sill.

6. Cooling device according to Claim 1, characterised in that the openings (23) provided in the bottom (22) of the second collector (16) are such that the level (25) of cooled sodium settles at a point located substantially 0.32 metres below the upper part of the overflow sleeve (18) forming the overflow sill.

**FIG.1**

EP 0 265 311 B1

FIG. 2

2